(19) Europäisches Patentamt
European Patent Office
Office européen des brevets

(11) Veröffentlichungsnummer: **0 252 983 B1**

(12) **EUROPÄISCHE PATENTSCHRIFT**

(45) Veröffentlichungstag der Patentschrift: **09.09.92**

(51) Int. Cl.[5]: **C07C 333/16**, A01N 47/14

(21) Anmeldenummer: **86901284.9**

(22) Anmeldetag: **30.12.85**

(86) Internationale Anmeldenummer:
**PCT/SU85/00108**

(87) Internationale Veröffentlichungsnummer:
**WO 87/04156 (16.07.87 87/15)**

# (54) SALZE DER N-(VINYLOXYÄTHYL)DITHIOKARBAMIDSÄURE, HERSTELLUNGSVERFAHREN UND SCHÄDLINGSBEKÄMPFUNGSMITTEL.

(43) Veröffentlichungstag der Anmeldung:
**20.01.88 Patentblatt 88/03**

(45) Bekanntmachung des Hinweises auf die Patenterteilung:
**09.09.92 Patentblatt 92/37**

(84) Benannte Vertragsstaaten:
**CH DE FR GB IT LI**

(73) Patentinhaber: **IRKUTSKY INSTITUT ORGANICHESKOI KHIMII SIBIRSKOGO OTDELENIA AKADEMII NAUK SSSR**
**ul. Favorskogo 1**
**Irkutsk, 664033(SU)**

Patentinhaber: **SIBIRSKY INSTITUT FIZIOLOGII I BIOKHIMII RASTENY SIBIRSKOGO OTDELENIA AKADEMII NAUK SSSR**
**ul. Lermontova 132**
**Irkutsk, 664033(SU)**

Patentinhaber: **VSESOJUZNY NAUCHNO-ISSLEDOVATELKSY INSTITUT KHIMICHESKIKH SREDSTV ZASCHITY RASTENY**
**ul. Ugreshskaya 33**
**Moscow, 109088(US)**

Patentinhaber: **NAUCHNO-PROIZVODSTVENNOE OBIEDINENIE PIVOBEZALKOGOLNOI PROMYSHLENNOSTI**
**ul. Rossolimo 7**
**Moscow, 119012(SU)**

Patentinhaber: **KUSTANAISKAYA NAUCHNO-ISSLEDOVATELSKAYA VETERINARNAYA STANTSIA KAZAKHSKOGO NAUCHNO-ISSLEDOVATELSKOGO INSTITUTA VOSTOCHNOGO**
**OTDELENIA VASKHNIL prospekt 501et Oktyabrya 94**
**Kustanai, 458018(SU)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 252 983 B1

(72) Erfinder: **TROFIMOV, Boris Alexandrovich**
**ul. Lermontova, 321a-32**
**Irkutsk, 664033(SU)**
Erfinder: **AMOSOVA, Svetlana Viktorovna**
**ul. Lermontova, 289-29**
**Irkutsk, 664033(SU)**
Erfinder: **IVANOVA, Nina Ivanovna**
**ul. Lermontova, 271-26**
**Irkutsk, 664033(SU)**
Erfinder: **ROZHKOV, Anatoly Sergeevich**
**ul. Lermontova, 321a-13**
**Irkutsk, 664033(SU)**
Erfinder: **MASSEL, Galina Ivanovna**
**ul. Lermontova, 327-46**
**Irkutsk, 664033(SU)**
Erfinder: **VORONKOV, Mikhail Grigorievich**
**ul. Lermontova, 315-32**
**Irkutsk, 664033(SU)**
Erfinder: **ANDREEVA, Elena Ivanovna**
**ul. M. Kalitnikovskaya, 20-1-12**
**Moscow, 109029(SU)**
Erfinder: **MONOVA, Violetta Ivanovna**
**ul. Vavilova, 89-102**
**Moscow, 117335(SU)**
Erfinder: **SMIRNOVA, Kapitolina Fedorovna**
**ul. Kukhmisterova, 12/23-65**
**Moscow, 109388(SU)**
Erfinder: **ZAIKIN, Boris Alexeevich**
**ul. V. Voloshinoi, 19a-73**
**Moskovskaya obl., Mytischi, 141014(SU)**
Erfinder: **PETROVA, Ljudmila Petrovna**
**ul. Pervomaiskaya, 52a-8**
**Moskovskaya obl., Dolgoprudny, 141700(SU)**
Erfinder: **KOPYLOVA, Elena Andreevna**
**ul. Pobratimov, 17-13**
**Moskovskaya obl., Ljubertsy, 140013(SU)**
Erfinder: **TARASOVA, Olga Anatolievna**
**ul. Lermontova, 297a-127**
**Irkutsk, 664033(SU)**
Erfinder: **ALPERT, Margarita Leonidovna**
**ul. Lermontova, 317-26**
**Irkutsk, 664033(SU)**
Erfinder: **GRIGORENKO, Vladimir Iliich**
**pr. Lenina, 11/I-7**
**Karagandinskaya obl., Temirtau, 472300(SU)**
Erfinder: **ROZHKOVA, Olga Ivanovna**
**per. Pogranichny, 6-53**
**Irkutsk, 664046(SU)**
Erfinder: **UDOVENKO, Viktor Alexandrovich**
**ul. Menzhinskogo, 21-270**
**Moscow, 129327(SU)**
Erfinder: **KUKALENKO, Stepan Safronovich**
**ul. Vorontsovskaya, 32/36-30**
**Moscow, 109044(SU)**
Erfinder: **ROZHKOVA, Natalya Georgievna**
**ul. Usievicha, 8-117**
**Moscow, 125319(SU)**
Erfinder: **FURSENKO, Evgenia Ivanova**
**ul. Krasny Kazanetz, 5-13**
**Moscow, 113395(SU)**
Erfinder: **MINKINA, Valentina Sergeevna**
**ul. Volovya, 3-156**
**Moscow, 109029(SU)**
Erfinder: **PONOMAREVA, Evgenia Evgenievna**
**ul. Zelenodolskaya, 45-3-51**
**Moscow, 109443(SU)**
Erfinder: **SMIRNOVA, Galina Konstantinova**
**ul. 2-ya Khutorskaya, 27-206**
**Moscow, 103287(SU)**
Erfinder: **YASHNOVA, Praskovya Mikhailovna**
**Leninsky pr., 156-272**
**Moscow, 117571(SU)**
Erfinder: **GOLIKOVA, Nina Vasilievna**
**ul. Chusovaya, II-4-59**
**Moscow, 107207(SU)**
Erfinder: **ISAEVA, Valeria Sergeevna**
**ul. V. Ulbrikhta, 8-42**
**Moscow, 125067(SU)**
Erfinder: **RATTEL, Natalya Nikolaevna**
**Tsvetnoi bulvar, 22-53**
**Moscow, 103051(SU)**
Erfinder: **ILYASCHENKO, Vitaly Iliich**
**ul. Kirova, 345-18**
**Kustanai, 458018(SU)**

(74) Vertreter: **von Füner, Alexander, Dr. et al**
**Patentanwälte v. Füner, Ebbinghaus, Finck**
**Mariahilfplatz 2 & 3**
**W-8000 München 90(DE)**

## Beschreibung

Die vorliegende Erfindung bezieht sich auf chemische Mittel zum Pflanzen- und Tierschutz gegen Krankheiten und Schädlinge und insbesondere auf N-(Vinyloxyäthyl)dithiocarbamate, Verfahren zu ihrer Herstellung und Pflanzenschutzmittel auf ihrer Grundlage.

Vorheriger Stand der Technik

Ein hoher Anteil an Ertragsverlusten entfallt heute in vielen Ländern auf Verluste, bedingt durch Schädlinge und Krankheiten im Pflanzenbau, durch schädliche Insekten in der Tierzucht, und einen großen Schaden fügt eine Massenvermehrung von Xylophagen in der Forstwirtschaft zu. Bekannt sind viele unterschiedliche Pflanzenschutzmittel zur Bekämpfung von Planzen- und Tierschädlingen und -krankheiten.

Unter Fungiziden, die zur Bekämpfung der Krankheiten von landwirtschaftlichen Kulturen heute Verwendung finden, sind besonders wirksam Tetramethylthiuramdisulfid (TMTD), Milon (3,5-Dimethyltetrahydro-1,3,5-thiadizin-1-thion-2), Polycarbazin (Komplexverbindung von Zinkäthylenbisdithiocarbamat und Äthylenthiuramdisulfid), Karbathion O,O-Dimethyl-O-(4-nitrophenyl)thiophosphat und Fundazol (1-Butylcarbamidobenzimidazolyl-2)-O-methylcarbamat, sowie Pentachlorphenol, welches als Antiseptikum für Holz und andere nichtmetallische Werkstoffe dient (L.I.Medved. Spravochnik po pestitsidam. Izdatelstvo "Urozhai", 1977; N.N.Melnikov, A.I.Volkov, O.A. Korotkova. Pestitsidyiokruzhajuschaya sreda. Izdatelstvo "Khimia ", 1977; K.A.Gar. Khimicheskie sredstva saschity selskokhozaistvennykh kultur. Rosselkhozizdat, 1978).

Tetramethylthiuramdisulfid (TMTD) ist ein breitwirkendes Pflanzenschutzmittel; Karbathion und Milon stellen Bodenfungizide dar. Die genannten Präparate wirken jedoch auf die Haut und Schleimhaut des Menschen stark reizend, was ihre breite Verwendung zum Schutz von grünen Pflanzen gegen pathogene Organismen erschwert. Karbathion und Milon weisen außerdem lange Wartezeiten (bis 40 Tage) vor Aussäen oder Auspflanzen auf.

Unter Fungiziden ist heute Fundazol das wirksamste. Es ist ein ziemlich teures Präparat, und seine Aufwandmengen müssen jedoch immer weiter erhöht werden, da sich Krankheitserreger schnell an Fundazol gewöhnen.

Da Phentachlorphenol sehr toxisch ist, sowie auf die Schleimhaut von Atemwegen und Augen reizend wirkt und Dermatitis verursachen kann, hat sich die Verwendung desselben in den letzten Jahren merklich herabgesetzt.

Als das verbreiteste Insektizid, das in der Landwirtschaft weitgehend zur Verwendung kommt, gilt Chlorophos, O,O-Dimethyl-(1-oxy-2,2,2-trichloräthyl)phosphonat, welches als 80%iges und 97%iges Präparat oder als 50%ige oberflächenaktive Pulver zum Einsatz gelangt (N.N.Melnikov. Khimia i tekhnologia pestitsidov, 1974, Izdatelstvo "Khimia" (Moskau), Seiten 489, 568, 575).

Chlorophos ist außerdem auch ein besonders verbreitetes Mittel zur Bekämpfung verschiedener Milben, die auf Tieren schmarotzen, darunter auch Räudemilben (Parazitologia i invazionnye bolezni selskokhozjaystvennykh zhivotnykh, 1982, Izdatelstvo "Kolos" (Moskau), Seiten 159 und 161).

Dieses Präparat ist jedoch nicht wirksam genug.

Somit fehlen zur Zeit Präparate, die eine fungizide, bakterizide, akarizide und insektizide Aktivität gleichzeitig aufweisen, sowie schwach toxisch und billig sind.

In der US-A-3 085 043 wird ein Verfahren zur Behandlung von Erdreich mit ungefähr 0,4 bis 500 pounds/acre einer Verbindung der Formel

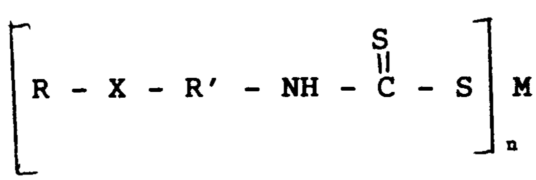

beschrieben, worin X aus der Gruppe von Sauerstoff und Schwefel ausgewählt wird, R' ein Alkylenrest mit 2 bis 6 Kohlenstoffatomen ist, R ausgewählt wird aus der Gruppe Alkyl-, Alkenyl-, Alkinyl- und Alkoxyalkylreste mit bis zu 9 Kohlenstoffatomen, M ausgewählt ist aus der Gruppe Alkalimetalle, Erdalkalimetalle, Schwermetalle und Ammoniumrest und n eine ganze Zahl in der Wertigkeit von M ist.

Die US-A-3 118 924 beschreibt Verbindungen der Formel

$$\left[R' - X - R - NH - \overset{\overset{S}{\parallel}}{C} - S\right]_n M$$

worin X ausgewählt ist aus der Gruppe Sauerstoff und Schwefel, R einen Alkylenrest mit 2 bis 6 Kohlenstoffatomen darstellt, R' einen Rest mit 1 bis 9 Kohlenstoffatomen bedeutet, ausgewählt aus der Gruppe Alkyl, Alkenyl, Alkinyl, 3-(2-Hydroxyethoxy)propyl, 3,6,9-Trioxadecyl und 2-Chlorallyl, M ausgewählt ist aus der Gruppe Allyl, Alkalimetall, Erdalkalimetall, Zn, Cd, Cu, Pb, Hg, Fe, Co, Ni, Cr, Mn und Ammonium, und n der Wertigkeit von M entspricht.

Offenbarung der Erfindung

Die Aufgabe der vorliegenden Erfindung bestand in der Suche nach neuen Stoffen, die fungizide, bakterizide, akarizide und insektizide Aktivitäten vereinigen, schwach toxisch sind und nach einem einfachen Verfahren aus billigen Rohstoffen herzustellen sind.

Die gestellte Aufgabe ist durch Entwicklung von N-(Vinyloxyäthyl)dithiocarbamaten gelöst worden, die erfindungsgemäß dadurch gekennzeichnet sind daß sie folgende Formel $[CH_2=CHOCH_2CH_2NHC(S)S]_nM$ haben, worin M für K, Na, Zn, Cu steht und n = 1,2.

Die angegebenen Stoffe sind neu entwickelt. Wir haben gefunden, daß diese Salze als Pflanzenschutzmittel wirken, wobei sie eine fungizide, bakterizide, akarizide, insektizide sowie antiphydante Aktivität aufweisen.

Die genannten Salze werden nach einem Verfahren hergestellt, welches erfindungsgemäß dadurch gekennzeichnet wird, daß man die Umsetzung von Viloxyäthylamin, Schwefelkohlenstoff und Metallhydroxid der Formel MOH, worin M für K, Na steht, in einem wäßrigen Medium oder in einem organischen Lösungsmittel unter Bildung von Salzen der Formel $[CH_2=CHOCH_2CH_2NHC(S)S]_nM$, worin M für K und Na steht, durchführt, wobei man dann aus diesen Salzen durch Behandlung derselben mit wasserlöslichen Zink- oder Kupfersalzen Salze der angegebenen Formel gewinnt, worin M für Zn und Cu steht.

Die Herstellung von Endprodukten der Formel, worin M für K und Na steht, erfolgt mit äquimolaren Mengen der Ausgangsreagenzien.

Als organisches Lösungsmittel kann man Vinloxyäthylamin, Benzol, Alkohole, zum Beispiel Isopropylalkohol sowie ein für diese Reaktion geeignetes beliebiges inertes Lösungmittel verwenden.

Die Umsetzung von Vinyloxyäthylamin mit Schwefelkohlenstoff und Kalium- bzw. Natriumhydroxid wird bei einer zwischen 20 und 80 °C liegenden Temperatur und unter Normaldruck durchgeführt.

Als wasserlösliche Zink- und Kupfersalze lassen sich Nitrate, Chloride, Bromide, Azetate und vorzugsweise Zink- und und Kupferchloride als besser und billiger zugängliche Salze verwenden.

Das Verfahren ist, wie aus der Beschreibung zu ersehen ist, einfach ausführbar, erfordert keinen Energieaufwand und keine Sonderausrüstung. Es ist im großtechnischen Maßstab leicht zu realisieren.

Das Verfahren ermöglicht die Herstellung von Produkten in hoher Ausbeute. Die Ausgangsstoffe sind bekannt, zugänglich und billig. Das Vinyloxyäthylamin kann durch Umsetzung von Monoäthanolamin mit Azetylen in Gegenwart von Alkalimetallhydroxid hergestellt werden (Zeitschrift "Izvestia Akademii nauk SSSR, otdel khimicheskikh nauk", 1951 Seiten 328-333 (Moskau). M.F.Shostakovsky., I.A.Chekulaeva, N.A.Gerstein. Sintez i prevraschenia vinilovykh efirov etanolaminov. (Soobschenie 1). Vinilirovanie monoetanolamina").

Kalium-N-(vinyloxyäthyl)dithiocarbamat der Formel $CH_2=CHOOH_2CH_2NHC(S)SK$ ist ein weißes Pulver mit Stich ins Grau oder Blaßgelb, hat ein schwaches spezifisches Geruch, ist gut in Wasser, beschränkt in Alkohol und Azeton löslich und in Diäthyläther unlöslich, lagerbeständig. Molekularmasse 201, Schmelztemperatur 180 °C, $LD_{50}$ = 1400 ± 350 mg/kg bei peroraler Applikation an weißen Mäusen.

Man erhält Kalium-N-(vinyloxyäthyl)dithiocarbamat durch Umsetzung von Vinyloxyäthylamin mit Schwefelkohlenstoff und Kaliumhydroxid nach folgendem Mechanismus:

$$CH_2=CHOCH_2CH_2NH_2 + CS_2 + KOH \rightarrow\rightarrow CH_2=CHOCH_2CH_2NHC(S)SK + H_2O$$

Die Reaktion verläuft bei Raumtemperatur oder einer höheren in einem Lösungsmittel.

Natrium-N-(vinyloäthyl)dithiocarbamat der Formel $CH=CHOCH_2CH_2NHC(S)SNa$ ist ein weißes Pulver mit schwachem spezifischem Geruch, das gut in Wasser und beschränkt in Äthylalkohol und Azeton löslich, in Diäthyläther unlöslich, lagerbeständig, wenig toxisch für Warmbluter ist. Molekularmasse 185, Schmelz-

punkt 172 °C, $LD_{50}$ = 260 mg/kg bei intraabdominaler Applikation an weißen Mäusen.

Man erhält Natrium-N-(vinyloxyäthyl)dithiocarbamat durch Umsetzung von Vinyloxyäthylamin mit Schwefelkohlenstoff und Natriumhydroxid analog zur Herstellung von Kalium-N-(vinyloxyäthyl)-dithiocarbamat.

Kupfer-N-(vinyloxyäthyl)dithiocarbamat der Formel $CH_2 = CHOCH_2CH_2NHC(S)SCu$ ist ein dunkelgrünes geruchloses Pulver, das in Wasser und Diäthyläther unlöslich, in Dimethylsulfoxid gut und in Äthylalkohol und Azeton beschränkt löslich, sowie lagerbeständig ist. Molekularmasse 226, Schmelzpunkt 128 bis 130 °C, $LD_{50}$ = 267 mg/kg bei intraabdominaler Applikation an weißen Mäusen.

Man erhält Kupfer-N-(vinyloxyäthyl)dithiocarbamat aus Kalium-N-(vinyloxyäthyl)dithiocarbamat durch Substitution nach dem Mechanismus:

$$CH_2{=}CHOCH_2CH_2NHC(S)SK + CuCl \xrightarrow{H_2O}$$
$$\longrightarrow CH_2{=}CHOCH_2CH_2NHC(S)SCu + KCl$$

Kupfer-bis-(N-vinyloxyäthyldithiocarbamat) der Formel $[CH_2 = CHOCH_2CH_2NHC(S)S]_2Cu$ ist ein gelbes Pulver mit schwachem spezifischem Geruch, das in Diäthyläther und Wasser unlöslich, in Äthylalkohol und Azeton beschränkt löslich, dimethylsulfoxidlöslich sowie lagerbeständig ist. Molekularmasse 388, Schmelzpunkt 121 °C. Man erhält Kupfer-bis-(N-vinyloxyäthyldithiocarbamat) aus Kalium-N-(vinyloxyäthyl)-dithiocarbamat und Kupfernitrat nach folgendem Mechanismus:

$$2CH_2{=}CHOCH_2CH_2NHC(S)SK + Cu(NO_3)_2 \xrightarrow{H_2O}$$
$$\longrightarrow [CH_2{=}CHOCH_2CH_2NHC(S)S]_2\,Cu + 2KNO_3.$$

Zink-bis-(N-vinyloäthyldithiocarbamat) der Formel $[CH_2 = CHOCH_2CH_2NHC(S)S]_2Zn$ ist ein weißes geruchloses Pulver, das wasserunlöslich, beschränkt in Azeton und Äthylalkohol, gut in Dimethylsulfoxid löslich ist. Molekularmasse 390, Schmelzpunkt 103 °C, $LD_{50}$ = 1120 ± 266 mg/kg bei peroraler Applikation an weißen Mäusen.

Man erhält Zink- bis-(N-vinyloxyäthyldithiocarbamat) aus Kalium-N-(vinyloxyäthyl)dithiocarbamat und Zinkchlorid in einem wäßrigen Medium nach folgendem Mechanismus:

$$2CH_2{=}CHOCH_2CH_2NHC(S)SK + ZnCl_2 \xrightarrow{H_2O}$$
$$\longrightarrow [CH_2 = CHOCH_2CH_2NHC(S)S]_2Zn + 2KCl$$

Die angegebenen Salze der N-(Vinyloxyäthyl)dithiocarbamidsäure besitzen wie oben hingewiesen eine fungizide, bakterizide, akarizide und insektizide Aktivität.

Diese Stoffe lassen sich sowohl ohne Träger in Form von Pulvern oder Granalien als auch auf einem flüssigen Träger in Form von wäßrigen Lösungen oder Lösungen der organischen inerten Lösungsmittel sowie Emulsionen verwenden. Die genannten Stoffe können außerdem auf einem festen Träger als oberflächenaktive Pulver und Suspensionen eingesetzt werden. Der Wirkstoffgehalt liegt zwischen 0,003 bis 95 %.

Das Kalium- und Natriumsalz der N-(Vinylxoyäthyl)dithiocarbamidsäure und Zink-bis-(N-vinyloxyäthyl-dithiocarbamat) zeigen eine sehr hohe Wirkung bei der Bekämpfung von Erregern der wichtigsten Krankheiten landwirtschaftlicher Kulturen, von Bodenschädlingen und Zerstörern nichtmetallischer Werkstoffe, und sie weisen außerdem eine bakterizide Wirkung auf.

Das Kupfersalz der N-(Vinyloxyäthyl)dithiocarbamidsäure besitzt eine antiphydante Aktivität. Eine hohe akarizide Aktivität gegen Räudemilben, welche die Psoroptesräude bei Tieren erregen, ist bei Kalium-N-(vinyloxyäthyl)dithiocarbamat und Natrium-N-(vinyloxyäthyl)dithiocarbamat gefunden. Kalium-N-(vinyloxyäthyl)dithiocarbamat und Zink-bis-(N-vinyloxyäthyldithiocarbamat) wirken in hohen Maße insektentötend gegen Fichtenböcke als Forstschädlinge.

Durch Prüfung von Kalium-N-(vinyloxyäthyl)dithiocarbamat als Beizmittel des Gerstensaatguts gegen Helminthosporiose ist festgestellt worden, daß der erfindungsgemäße Stoff zweimal wirksamer als Vergleichsmuster (TMTD und Polykarbazin) bei einer Aufwandmenge von 1 g/kg ist.

Die Wirkung von Kalium-N-(vinyloxyäthyl)dithiocarbamat auf Myzelien der Pilze Fusarium moniliforme, Fusarium sambucinum, Botrytis cinerea, Venturia inaegualis, Aspergillus niger, Verticillium danliae und auf Bakterien Xantomonas malvacearum hat gezeigt, daß seine Aktivität auf gleicher Höhe mit den gewählten Vergleichsmustern TMTD und Polykarbazin liegt; gegen Myzelium der Pilze Sphaeropsis malorum und Rhizoctonia solani hat sich der Stoff aktiver als TMTD und gegen Pilze Rhizoctonia solani wirksamer als Polykarbazin erwiesen.

Die Aktivität von Kalium-N-(vinyloxyäthyl)dithiocarbamat gegen Myzelium von Pilzen als Zerstörer nichtmetallischer Werkstoffe, nämlich Chaetomium globosum, Aspergillus niger, Paecilomyces varioti, Stereum hirsutum entspricht dem Salizylanilid als Vergleichsmuster, und gegen Myzelium von Penicillium funiculosum übersteigt sie dieses um 10 %. Der Vergleich von Kalium-N-(vinyloxyäthyl)dithiocarbamat mit Polykarbazin (Vergleichsmuster) zeigt, daß seine Aktivität auf gleicher Höhe mit dem Vergleichsmuster liegt und gegen das Myzelium der Pilze Chaetomium globosum um 10% übersteigt.

Die Prüfung der angegebenen Verbindung als Bodenfungizid an Fusarium oxysporum, Verticillium dahliae, Rhizoctonia solani hat ergeben, daß Kalium-N-(vinyloxyathyl)dithiocarbamat eine zu Karbathion als Vergleichsmuster gleiche Aktivität hat.

Kalium-N-(vinyloxyäthyl)dithiocarbamat wurde gegen Wurzelschimmelkomplex von Gewächshausgurken auf einer Fläche von 200 $m^2$ und 1 ha geprüft. Die auf einer 200 $m^2$ großen Fläche durchgeführten Prüfungen haben gezeigt, daß Kalium-N-(vinyloxyäthyl)dithiocarbamat die 100%ige Unterdrückung von Erregern der Pythium-Fäule und der begleitenden Gurkenwurzelschimmeln bewirkt. Der Ernteertrag steigt dabei durch Bodenbehandlung um 4,2 kg/$m^2$ gegenüber Kontrolle (ohne Wirkstoffgabe ist der Ertrag 10 kg/$m^2$ und um 1,6 kg/$m^2$ gegenüber Fundazol an.

Auf Grund der auf einer 1 ha großen Fläche durchgeführten Versuche kann Kalium-N-(vinyloxyäthyl)-dithiocarbamat zur Bekämpfung von Gurkenwurzelschimmel im Gewächshaus an vegetierenden Pflanzen auf dem Hintergrund des hohen, mittleren und anderen Befallumfangs bei einer Konzentration von 0,025 % Wirkstoff empfohlen werden. Die Aufwandmenge der wäßrigen Lösung des Stoffs beträgt 1,3 l/$m^2$ (0,4 g/$m^2$). Die Aufwandmenge des angegebenen Stoffs beträgt also 4 kg/ha gegenüber 8 kg/ha Fundazol (Vergleichsmuster), bezogen auf den Wirkstoff.

Die Prüfung der Verbindung als Fungizid, welches die Entwicklung von Schimmelpilzen der Gattung Cladosporium, Acremonium, Penicillium, Geotrichum, Walrotiela, Oidium hemmt, hat ihre hohe Wirksamkeit ergeben.

Natriumsalz der N-(Vinyloxyäthyl)dithiocarbamidsäure ist in hohem Maße wirksam gegen Myzelien von Pilzen Fusarium sambucinum, Sphaeropsis malorum, Rhizoctonia solani, Fusarium moniliforme, Aspergillus niger und zwar unterdrückt das Wachstum des Myzeliums der Pilze um 100 % und das Wachstum von Bakterien Xantomonas malvacearum um 33 %.

Kupfer-N-(vinyloxyäthyl)dithiocarbamat ist wirksam, obgleich in geringerem Maße als Kalium- und Zinksalze gegen Pilze der Gattung Cladosporium, Acremonium, Penicillium, Geotrichum, Walrotiela.

Dieser Stoff hat eine antiphydante Aktivität auf gleicher Höhe mit Brestan (Fa. Höchst BRD) als Vergleichsmuster gezeigt.

Die Prüfung der antiphydanten Aktivität wurde an gewöhnlichen Mehlkäfern und Schwarmspinnerraupen durchgeführt.

Durch Wirkung von Zink-bis-(N-vinyloxyäthyldithiocarbamat) auf Myzelien der Pilze Fusarium moniliforme, Aspergillus niger, Rhizoctonia solani, Fusarium sambucinum, Sphaeropsis malorum und auf Bakterien Xantomonas malvacearum wurde festgestellt, daß seine Aktivität sehr hoch ist: Es unterdrückt die Entwicklung von Myzelium der genannten Pilze völlig und wirkt analog TMTD bei gleichen Konzentrationen der zu prüfunden Stoffe.

Die Prüfung der antiseptischen Aktivität hat gezeigt, daß Zink-bis-(N-vinyloxyäthyldithiocarbamat) gegen Pilze Paecilomyces varioti, Stereum hirsutum, Penicillium funiculosum, Penicillium chrysogenum, Penicillium charlesii Smith, Cladosporium resinae, Cladosporium cladosporioides, Acremonium cowum, Acremonium charticole, Walrotiela subiculesa, Geotrichum candidum Link, Oidium sp., Aspergillus niger sehr wirksam ist.

Die Prüfung von Zink-bis-(N-vinyloxyäthyldithiocarbamat) als Bodenfungizid wurde bei der Aufzucht von Gurken durchgeführt. Diese Verbindung erwies sich als sehr wirksam auch in diesem Falle. Es ist festgestellt, daß bei der Verwendung von Zink-bis-(N-vinyloxyäthyldithiocarbamat) die Samenkeimung um 11 % gegenüber Kontrolle und um 15 % gegenüber Milon (Vergleichmuster) ansteigt. Die Entwicklung von Wurzelschimmel vermindert sich um das llfache gegenüber Kontrolle und etwas geringer gegenüber Milon.

Was Schimmelpilze anbetrifft, so wurde die Prüfung von Zink-bis-(N-vinyloxyäthyldithiocarbamat) an reinen Kulturen der Pilze Penicillium, Aspergillus, Rhizopus, Rhacodia cereale durchgeführt.

Die erhaltenen Ergebnisse zeugen von der hohen fungiziden Aktivität von Zink-bis-(N-vinyloxyäthyldit-

hiocarbamat).

Die Einführung von Zink-bis-(N-vinyloxyäthyldithiocarbamat) in die Praxis wird also ermöglichen, die Auswahl an Bodenfungiziden und Fungiziden für grüne Pflanzen zu erweitern sowie den Schimmelpilzbefall zu bekämpfen.

Kalium-N-(vinyloxyäthyl)dithiocarbamat und Natrium-N-(vinyloxyäthyl)dithiocarbamat weisen eine akarizide Aktivität auf.

Die Stoffe wurden an isolierten Milben Psoroptes cuniculi als Erreger der Psoroptesräude bei Kaninchen geprüft. Die Prüfungen haben ergeben, daß die beiden Stoffe eine etwa gleiche aber bedeutend stärkere akarizide Wirkung auf Milben gegenüber Chlorophos ausüben. An ihrer selektiven Toxizität gegen Räudemilben sind die beiden Stoffe dem Chlorophos fast 400mal überlegen, der Wert der Lethalkonzentration (LK-50) beträgt bei Natrium-N-(vinyloxyäthyl)dithiocarbamat 0,0022 %, bei Kalium-N-(vinyloxyäthyl)-dithiocarbamat 0,00208 % und bei Chlorophos 0,8 %. Diese Stoffe sind dem Chlorophos auch an der Geschwindigkeit der toxischen Wirkung überlegen. So bewirkten die 1 bis 4%igen wäßrigen Lösungen der beiden Präparate eine 100%ige Vernichtung der Milben innerhalb von 2 Stunden, während die 3%igen wäßrigen Lösungen von Chlorophos 100 % Milben nur innerhalb von 24 Stunden vernichten.

Die hohe insektizide Aktivität von Kalium-N-(vinyloxyathyl)dithiocarbamat und Zink-bis-(N-vinyloxyathyl-dithiocarbamat) wurde in Versuchen an Larven von Fichtenböcken nachgewiesen. Geprüft wurden die 10%igen wäßrigen (oder alkoholischen) Lösungen, welche auf die Kopfbrust von Larven aufgebracht wurden. In Versuchen standen je 20 Larven zur Verfügung. Die Versuche wurden dreimal wiederholt. Die Mortalität wurde nach 1, 24 und 48 Stunden ermittelt. Die insektizide Aktivität der erfindungsgemäßen Stoffe ist bedeutend höher als die von Chlorophos.

Beste Ausführungsvarianten der Erfindung

Nach der besten Ausführungsform erfolgt die Herstellung von Kalium-N-(vinyloxyäthyl)dithiocarbamat durch Umsetzung von Vinyloxyäthylamin, Schwefelkohlenstoff und Kaliumhydroxid in einem Molverhältnis von 2:1 bzw. 1 bei einer zwischen 40 und 45 °C liegenden Temperatur. Als Lösungsmittel dient in diesem Falle der Überschuß von Vinyloxyäthylamin. Die Reaktion verläuft mit Erfolg auch beim äquimolaren Verhältnis der Reagenzien in Isopropylalkohol bei einer Temperatur von 60 °C. Dag Verfahren zur Herstellung von Zink-bis-(N-vinyloxyäthyldithiocarbamat) wird durch Umsetzung von Kalium-N-(vinyloxyäthyl)dithiocarbamat mit Zinkchlorid in einem Molverhältnis von 2:1 in wäßrigem Medium durchgeführt. Die Reaktion verläuft exotherm, wobei die Temperatur 65 ° C erreicht, unter anschließender spontaner Abkühlung.

Kalium- und Zink-N-(vinyloxyäthyl)dithiocarbamate sind sehr wirksam bei der Bekämpfung von Erregern der wichtigsten Krankheiten von landwirtschaftlichen Kulturen, von Bodeninfektion und Zerstörungen nichtmetallischer Werkstoffe.

Neben der hohen fungiziden Aktivität weisen diese Salze eine bakterizide Aktivität auf. Eine hohe akarizide Aktivität gegen Räudemilben, welche die Psoroptesräude bei Tieren auslösen, weisen Natrium-N-(vinyloxyäthyl)dithiocarbamat und Kalium-N-(vinyloxyäthyl)dithiocarbamat auf. Kalium-N-(vinyloxyäthyl)-dithiocarbamat und Zink-bis-(N-vinyloxyäthyldithiocarbamat) zeigen eine hohe insektizide Aktivitat gegen Fichtenböcke als Forstschädlinge.

Zum besseren Verstehen der Erfindung werden folgende Beispiele angeführt, wobei Beispiele 1 bis 7 die Synthese der angegebenen Stoffe und Beispiele 8 bis 18 ihre Aktivität als Pflanzenschutzmittel näher erläutern.

Beispiel 1. Synthese von Kalium-N-(vinyloxyäthyl)dithiocarbamat

Man setzt zu 34,8 g (0,4 Mol) Vinyloxyathylamin 11,2 g (0,2 Mol) Kaliumhydroxid zu, gibt dann 15,2 g (0,2 Mol) Schwefelkohlenstoff zu, rührt nachher 5 Stunden bei einer zwischen 40 und 45 °C liegenden Temperatur um und destilliert den Überschuß von Vinyloxyäthylamin ab. Der Kristalline Rückstand wird mit 30 ml Äthylalkohol und dann mit 15 ml Diäthyläther gewaschen. Die Kristalle werden getrocknet. Man erhält 31,8 g Kalium-N-(vinyloxyäthyl) dithiocarbamat mit 79%iger Ausbeute. Gefunden in %: C 29,78; H 4,0; S 32,6; N 6,82; $C_5H_8NOS_2K$. Berechnet in %: C 29,85; H 3,98; S 31,84; N 6,9.

EPK-Spektrum 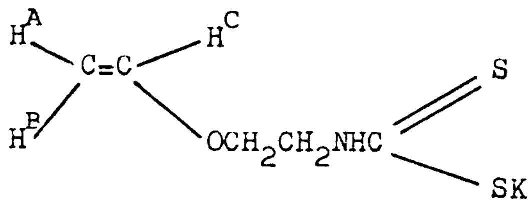 ($D_2O$, HMDS,

$\delta$ ppm, J Hz): 4,2 m, (4 H, $OCH_2CH_2$), 4,46 m (IH, $H^A$), 4,66 m (IH, $H^B$), 6,81 qu, (IH, $H^C$); $J_{AC}$ =8, $J_{BC}$ =15. Dag IR-Spektrum enthält ($\nu$ $cm^{-1}$) Banden, die für eine Vinyloxygruppe charakteristisch sind: 820,960, 1200, 1320, 1620, 1640, 3060, 3100.

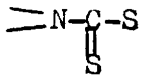 - Gruppe

liegt bei 1490 $cm^{-1}$ vor.

Beispiel 2

Man setzt einem Gemisch von 43,5 g (0,5 Mol) Vinyloxyäthylamin, 28 g (0,5 Mol) Kaliumhydroxid und 9 g Wasser 38 g (0,5 Mol) Schwefelkohlenstoff zu. Die Reaktionstemperatur erreicht dabei 60 bis 70 °C. Nach der Beendigung der Reaktion gibt man 50 ml Azeton in das abgekühlte Reaktionsgut auf, rührt um und filtriert den kristallinen Niederschlag ab, der mit Diäthyläther gewaschen und getrocknet wird. Man erhält 45 g Kalium-N-(vinyloxyäthyl)dithiocarbamat. Die Ausbeute an Produkt beträgt 45 % (der Theorie).

Beispiel 3

In einen Reaktor von 100 Liter Fassungsvermögen, versehen mit einem Rührwerk, Kühler, Thermometer und Tropfentrichter, beschickt man 12,6 kg Kaliumhydroxid, 20,39 kg (22,73 l ) Vinyloxyäthylamin und 25 Isopropylalkohol als Lösungsmittel. Unter Umrühren setzt man 17,1 kg (13,58 l) Schwefelkohlenstoff, der im Tropfentrichter unter Wasserschicht vorhanden ist, mit solcher Geschwindigkeit zu, daß die Reaktionstemperatur 60 °C nicht ubersteigt. Nach dem Zusetzen von Schwefelkohlenstoff wird das Reaktionsgut innerhalb von 2 Stunden weiter vermischt, wonach es auf Raumtemperatur abgekühlt und dann auf ein Filter ausgetragen wird. Der Filterrückstand wird mit Isopropylalkohol in einer Menge von 16,7 l gewaschen, die Prozedur wird zweimal wiedernolt. Das durch zweifache Behandlungen gewonnene Filtrat dient als Lösungsmittel für nachfolgende Beschickungen. Das gewaschene Kalium-N-(vinyloxyäthyl)dithiocarbamat wird bei einer zwischen 20 und 30 °C liegenden Temperatur getrocknet. Man erhält 27 kg. Die Ausbeute an Produkt beträgt 60 %.

Beispiel 4 Synthese von Natrium-N-(vinyloxyäthyl)dithiocarbamat

Man setzt zu 50 ml (0,517 Mol) Vinyloxyäthylamin und 13,8 g (0,344 Mol) Natriumhydroxid 20,7 ml (0,344 Mol) Schwefelkohlenstoff in 27 ml Benzol zu. Nach der Beendigung der Reaktion destilliert man Benzol und teilweise Wasser ab. Der Rückstand wird mit Diäthyläther-Äthanol-Gemisch im Verhältnis von 3:1 zweimal gewaschen. Man erhält 48,4 g Natrium-N-(vinyloxyäthyl)dithiocarbamat. Die Ausbeute an Produkt beträgt 76 %. Gefunden in %: C 32,10; H 4,23; S 33,95; N 7,84; $C_5H_8NOS_2Na$. Berechnet in %: C 32,43; H 4,32; S 34,60;

EPR-Spektrum 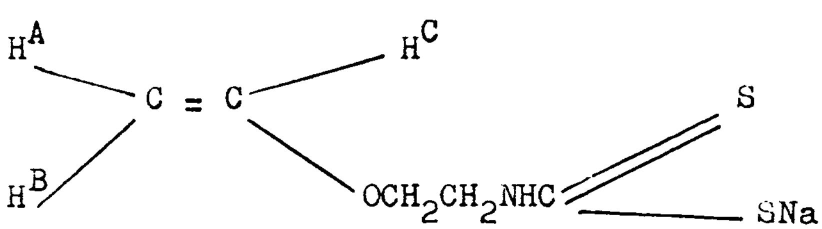

N 7,57. ($D_2O$, HMDS, $\delta$ ppm; J, Hz); 4,2 m (4 H, $OCH_2CH_2N$), 4,46 m (I H, $H^A$), 4,66 m (IH, $H^B$), 6,81 qu (IH, $H^C$), $J_{AC} = 8$; $J_{BC} = 15$.

Das IR-Spektrum ($\nu$ $cm^{-1}$) enthält Banden, die für eine Vinylhydroxygruppe charakteristisch sind: 820, 960, 1200, 1320, 1620, 1640, 3080, 3100;

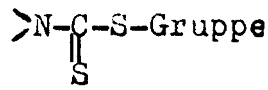

liegt bei 1490 $cm^{-1}$ vor.

Beispiel 5. Synthese von Kupfer-N-(vinyloxyäthyl)dithiocarbamat

Man setzt zu 201 g (1 Mol) in 250 ml gelöstem Kalium-N-(vinyloxyäthyl)dithiocarbamat 99 g (1 Mol) Kupfermonochlorid (CuCl), gelöst in 100 ml Wasser unter Vermischen bei einer zwischen 30 und 35 °C liegenden Temperatur hinzu. Das Reaktionsgemisch wird auf Wasserbad bei einer Temperatur von 55 bis 60 °C innerhalb von 3 bis 5 Minuten unter kontinuierlichem Umrühren gehalten. Das entstandene kristalline Produkt nimmt eine grünliche Farbe an. Man filtriert das Reaktionsgut, trennt den Niederschlag ab, wäscht mit 100 ml Äthylalkohol und dann mit 60 ml Diäthyläther, trocknet und erhält 225,8 g Kupfer-N-(vinyloxyäthyl)dithiocarbamat. Die Ausbeute au Produkt beträgt 100 %.

Gefunden in %: C 26,52; H 3,62; S 27,65; Cu 30,28; 30,87. Berechnet in %: C 26,45; H 3,52; S 28,19; Cu 27,99.

EPR- und IR-Spektren von Kupfer-N-(vinyloxyäthyl)dithiocarbamat sind den Spektren von Kalium- und Natriumsalzen der N-(Vinyloxyäthyl)dithiocarbamidsäure ähnlich.

Beispiel 6. Synthese von Kupfer-bis-(N-vinyloxyäthyldithiocarbamat)

Man setzt zu 100,5 g (0,5 Mol) in 500 ml Wasser gelöstem Kalium-N-(vinyloxyäthyl)dithiocarbamat 46,9 g (0,25 Mol) Kupfernitrat $Cu(NO_3)_2$, gelöst in 200 ml Wasser, unter Umrühren hinzu. Die entstandenen gelben Kristalle werden mit Wasser, Äthylalkohol, Diäthyläther gewaschen und getrocknet. Man erhält 55,3 g Kupfer-bis-(N-vinyloxyäthyldithiocarbamat). Die Ausbeute an Produkt beträgt 57 %.

Gefunden in %: C 29,81; H 3,93; S 31,76; Cu 16,02.

Berechnet in %: C 30,99; H 3,87; S 33,09; Cu 16,39.

EPR- und IR-Spektren von Kupfer-bis-(N-vinyloxyäthyldithiocarbamat) sind den Spektren von Kalium- und Natriumsalzen der N-(Vinyloxyäthyl)dithiocarbamidsäure ähnlich.

Beispiel 7. Synthese von Zink-bis-(N-vinyloxyäthyldithiocarbamat)

Man setzt zu 120,6 g (0,6 Mol) in 150 ml Wasser gelöstem Kalium-N-(vinyloxyäthyl)dithiocarbamat 40,9 g (0,3 Mol) Zinkchlorid, gelöst in 50 ml Wasser, unter Umrühren hinzu. Die Reaktion verläuft exotherm (auf 60 bis 65°C) innerhalb von 30 bis 40 Minuten. Beim Erreichen der Raumtemperatur filtriert man den entstandenen weißen Rückstand ab, wäscht mit 100 ml Azeton und dann mit 60 ml Diäthyläther, trocknet bei Raumtemperatur und erhält 112,8 g Zink-bis-(N-vinyloxyäthyldithiocarbamat). Die Ausbeute an Produkt beträgt 96,5 %.

Gefunden in %: C 31,0; H 4,49; S 32,01; Zn 12,32; N 7,25.

Berechnet in %: C 30,79; H 4,10; S 32,91; Zn 11,9; N 7,18.

EPR-Spektrum (DMSO-$d_6$, HMDS, $\delta$ ppm, J Hz):

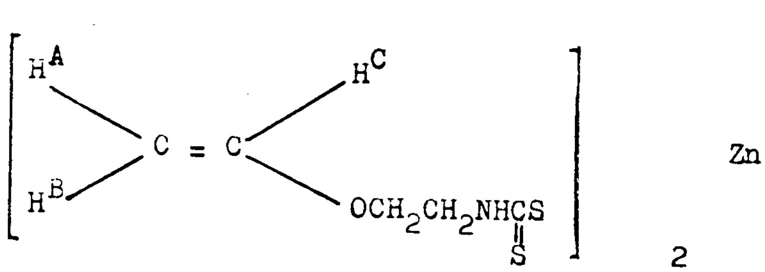

3,9 m (4H, $OCH_2CH_2N$), 4,5 m (IH, $H^A$), 4,31 m (IH, $H^B$), 6,78 qu (IH,$H^C$); $J_{AC}$ = 8, $J_{BC}$ = 15. Das IR-Spektrum ($\nu$, $cm^{-1}$) enthält Banden, die für Vinyloxygruppe 820, 980, 1200, 1320, 1620, 1640, 3020 charakteristisch sind.

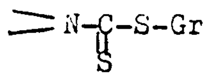-Gruppe

liegt bei 1510 $cm^{-1}$ vor.

Beispiel 8. Fungizide Aktivität von Kalium-N-(vinyloxyathyl)dithiocarbamat

Die Prüfungen werden nach dem Verfahren zur Ermittlung der Kontaktaktivität durchgeführt. Man verwendet das in Wasser gelöste Kalium-N-(vinyloxyäthyl)dithiocarbamat, führt es in ein Nährmedium ein und vergießt auf Petri-Schalen. Nach 24 Stunden wird mit Pilzmyzelium nach einem Stichverfahren geimpft. Dann temperiert man die Schalen innerhalb von 5 Tagen bei einer zwischen 24 und 26 °C liegenden Temperatur und mißt den Durchmesser von Pilzkolonien, ermittelt den Prozentsatz der Hemmung des Myzelwachstums (S) ausgehend von Angaben am 5. Tag nach der Abbott-Formel

$$S = \frac{dc - de}{dc} \cdot 100$$

worin dc für den Durchmesser der Pilzkolonien, de für den Durchmesser von Pilzkolonien in der Schale stehen, wo ein die zu prüfenden Stoffe enthaltendes Medium vorhanden ist. Dieses Verfahren zur Ermittlung der mikrobiologischen Aktivität ist in anderen Beispielen verwendet.

Die Pilzkulturen werden auf Würzeagar gezüchtet. Ergebnisse, erhalten bei der Prüfung der fungiziden Aktivität gegen reine Kulturen von Mikroorganismen, welche Bioschädigungen hervorrufen, sind in der Tabelle 1 dargestellt.

Tabelle 1. Fungizide Aktivität von Kalium-N-(vinyloxyäthyl) dithiocarbamat gegen Schimmelpilze

| Lfd. Nr. | Präparatkonzentration in % | Myzelhemmung in % | | | |
|---|---|---|---|---|---|
| | | Cladosporium resinae | Cladosporium cladosporioides | Acremonium cowum | Acremonium charticola |
| 1 | 2 | 3 | 4 | 5 | 6 |
| 1. | 0,012 | 100 | 100 | 100 | 100 |
| 2. | 0,006 | 100 | 100 | 100 | 100 |
| 3. | 0,003 | 100 | 100 | 100 | 100 |
| 4. | 0,0015 | 100 | 100 | 100 | 100 |

Fortsetzung der Tabelle 1

| Lfd. Nr. | Myzelhemmung in % | | | | |
|---|---|---|---|---|---|
| | Penicillium chrysogenum | Penicillium charlesii | Walrotiela subiculesa | Geotrichum candidum Link | Oidium Sp. |
| 1 | 7 | 8 | 9 | 10 | 11 |
| 1. | 100 | 100 | 100 | 100 | 100 |
| 2. | 93 | 90 | 100 | 100 | 100 |
| 3. | 26 | 55 | 100 | 100 | 100 |
| 4. | 15 | 30 | 100 | 30 | 96 |

Wie die Tabelle 1 zeigt, daß der angegebene Stoff in einer Konzentration von 0,012% die Entwicklung aller in der Tabelle dargestellten Pilze völlig hemmt; bei einer Konzentration von etwa 0,003% wurde die Entwicklung aller Test-Pilze außer Pilze Penicillium gehemmt.

Tabelle 2 zeigt die Angaben für die fungizide Aktivität von Kalium-N-(vinyloxyäthyl)dithiocarbamat und bekannten wirksamen Fungiziden Poly arbazin und TMTD. Der zu prüfende Stoff wurde im Laufe der Versuche in Wasser aufgelöst, und die Kulturen wurden auf einem Kartoffel-Glukose-Nährmedium gezüchtet.

Tabelle 2. Fungizide Aktivität von Kalium-N-(vinyloxyäthyl) dithiocarbamat gegen Pilze, welche landwirtschaftliche Kulturen beschädigen

| Lfd. Nr. | Myzelhemmung in % | | | | | | | |
|---|---|---|---|---|---|---|---|---|
| | Bezeichnung des Präparats | Wirkstoffkonzentration in % | Fusarium sambucinum | Fusarium moniliforme | Botritis cinerea | Aspergillus niger | Venturia inaequalis | Verticilium dah- |
| 1. | Kalium-N-(vinyloxyäthyl)dithiocarbamat | 0,01 | 100 | 100 | 100 | 100 | 100 | 100 |
| | | 0,003 | 100 | 100 | 100 | 100 | 100 | 100 |
| 2. | Zinkäthylenbisdithiocarbamat-Äthylenthiuram-disulfid-Komplex (Polykarbazin) als Vergleichsmuster | 0,01 | 100 | 100 | 100 | 100 | 100 | 100 |
| | | 0,003 | 100 | 100 | 100 | 100 | 100 | 100 |
| 3. | TMTD (Vergleichsmuster) | 0,01 | 100 | 100 | 100 | 100 | 100 | 100 |
| | | 0,003 | 100 | 100 | 100 | 100 | 100 | 100 |

Der durchgeführte Vergleich hat ergeben, daß die fungizide Aktivität des erfindungsgemaßen Stoffs auf gleicher Höhe mit den verwendeten Vergleichsmustern liegt.

Tabelle 3 zeigt, daß Kalium-N-(vinyloxyäthyl)dithiocarbamat in einer Konzentration von 0,003 % eine fungizide Aktivität auf gleicher Höhe mit Polykarbazin und Salizylanilid hat.

Tabelle 3

| Fungizide Aktivität von Kalium-N-(vinyloxyäthyl)dithiocarbamat gegen Pilze als Zerstörer nichtmetallischer Werkstoffe | | | | | | |
|---|---|---|---|---|---|---|
| Bezeichnung des Präparats | Wirkstoff konzentration in % | Mycelhemmung, in % | | | | |
| | | Aspergillus niger | Chaetomium globosum | Paecilomyces varioti | Stereum hirsutum | Penicillium funiculosum |
| Kalium-N-vinyloxyäthyl)-dithiocarbamat | 0,003 | 100 | 100 | 100 | 100 | 100 |
| Zinkäthylenbisdithiocarbamat-Äthylenthiuramdisulfid-Komplex (Polykarbazin) als Vergleichsmuster | 0,003 | 100 | 100 | 100 | 100 | 100 |
| Salizylanilid (Vergleichsmuster) | 0,003 | 100 | 100 | 100 | 100 | 100 |

Beispiel 9. Fungizide Aktivität von Kalium-N-(vinyloxyäthyl)dithiocarbamat bei der Bekämpfung der Wurzelfäule der Gerste

Die Aktivität der Verbindung gegen Wurzelfäule (Helminthosporiose) der Gerste wurde unter Laborbedingungen untersucht. Gerstensamen, infiziert mit einer 7 Tage alten Pizkultur Helminthosporium sativum, wurden durch Präparaten ausgehend von 1 g Präparat (bezogen auf den Wirkstoff) je 1 kg Samen nach einem halbtrockenen Verfahren gebeizt, in Aufzuchträume mit befeuchtetem Sand gesät und innerhalb von 11 bis 14 Tagen bei einer zwischen 20 und 22 °C gehalten. Am 14 Tag schätzte man die Keimfähigkeit von Gerstensamen ein und ermittelte die Quote von durch Helminthosporiose befallenen Pflanzen. Die Prüfergebnisse sind in der Tabelle 4 dargestellt.

Tabelle 4

| Wirksamkeit von Kalium-N-(vinyloxyäthyl)dithiocarbamat als Beizmittel für Gerstensamen gegen Helminthosporiose | | | |
|---|---|---|---|
| Präparat | Aufwandmenge des Präparats in g/kg | Keimfähigkeit in % | Befall durch Helminthosporiose in % |
| 50%iges oberflächenaktives Pulver (o.P) von Kalium-N-(vinyloxyäthyldithiocarbamat | 2 | 95 | 14 |
| Zinkäthylenbisdithiocarbamat--Äthylenthiuramdisulfid (Polykarbazin)-Komples als Vergleichsmuster | 2 | 95 | 31 |
| 80%iges (o.P) TMTD | 2 | 97 | 16 |
| Kontrolle | - | 97 | 81 |

Wie Tabelle 4 zeigt, ist die erfindungsgemäße Verbindung als Beizmittel ein sehr wirksames Präparat gegen Helminthosporiose der Gerste.

Beispiel 10. Kalium-N-(vinyloxyäthyl)dithiocarbamat als Bodenfungizid

Eine 50 g schwere Bodenprobe bringt man in ein Glasgefäß ein, sterilisiert innerhalb von 2 Stunden unter einem Druck von 2 atm, gibt dann dem Boden das Präparat als wäßrige Lösung ausgehend von 160 mg/kg zu, wonach in den Boden Scheiben mit Kulturen folgender Pilze Fusarium oxysporum, Verticillium dahliae, Rhizoctonia solani, Pythium ultimum untergebracht werden.

Nach 24 und 48 Stunden werden die Scheiben in fließendem Wasser, dann in sterilem Wasser gewaschen, auf sterilem Filterpapier getrocknet und auf eine reine Agarplatte gelegt. Das Vorhandensein (+) oder das Fehlen (-) des wachsenden Myzels um die Scheibe herum wies auf die Wirksamkeit des Präparats. Als Vergleichsmuster diente dabei Karbathion. Die Prüfergebnisse sind in der Tabelle 5 dargestellt.

Tabelle 5

| Wirksamkeit von Kalium-N-(vinyloxyäthyl)dithiocarbamat als Bodenfungizid | | | | | | | | |
|---|---|---|---|---|---|---|---|---|
| Präparat | Benennung der Objekte | | | | | | | |
| | Eusarium oxysporum | | Verticillium dahliae | | Rhizoctonia solani | | Pythium ultimum | |
| | Haltedauer in Stunden | | | | | | | |
| | 24 | 48 | 24 | 48 | 24 | 48 | 24 | 48 |
| Kalium-N-(vinyloxyäthyl)dithiocarbamat | - | - | - | - | - | - | - | - |
| Karbathion (Vergleichsmuster) | - | - | - | - | - | - | - | - |
| Kontrolle | + | + | + | + | + | + | + | + |

Somit weist die erfindungsgemäße Verbindung Kalium-N-(vinyloxyäthyl)dithiocarbamat eine hohe fungizide Aktivitat gegen oben angegebene Pilze darunter auch Pilze auf, die als Haupterreger von Krankheiten landwirtschaftliche Kulturen dienen, sowie gegen Pilze, die nichtmetallische Werkstoffe zerstören, auf. Diese Verbindung ist außerdem sehr wirksam gegen Bodeninfektion und Erreger der Helminthosporiose der Gerste.

Beispiel 11. Fungizide Aktivität von Zink-bis-(N-vinyloxyäthyldithiocarbamat)

Die fungizide Aktivität von Zink-bis-(N-vinyloxyäthyldithiocarbamat) gegen reine Kulturen von Pilzen Fusarium moniliforme, Fusarium sambucinum, Aspergillus niger, Rhizoctonia solani, Cladosporium resinae, Cladosporium cladosporioides, Acremonium cowum, Acremonium charticola, Penicillium chrysogenum, Penicillium charlesii Smith, Penicillium funiculosum, Geotrichum candidum Link, Walrotiela subiculesa, Oidium sp., Paecilomyces varioti, Stereum hirsutum wird gemäß Beispiel 8 untersucht.

Als Nährmedium dient Würzeagar.

Angaben uber die Prüfung der fungiziden Aktivität gegen reine Pilzkulturen sind in der Tabelle 6 dargestellt.

Tabelle 6. Fungizide Aktivität von Zink-bis-(N-vinyloxyäthyldithiocarbamat) gegen Schimmelpilze

| Lfd. Nr. | Konzentration des Präparats | Myzelhemmung in % | | | |
|---|---|---|---|---|---|
| | | Cladosporium resinae | Cladosporium cladosporioides | Acremonium cowum | Acremonium charticola |
| 1 | 2 | 3 | 4 | 5 | 6 |
| 1. | 0,012 | 100 | 100 | 100 | 100 |
| 2. | 0,006 | 100 | 100 | 100 | 100 |
| 3. | 0,003 | 100 | 100 | 100 | 100 |
| 4. | 0,0015 | 37,5 | 100 | 40 | 50 |

Fortsetzung der Tabelle 6

| lfd. Nr. | Penicillium chrysogenum | Myzelhemmung in % | | | |
|---|---|---|---|---|---|
| | | Penicillium charlesii | Valrotiela subiculesa | Geotrichum candidum Link | Oidium sp. |
| 1 | 7 | 8 | 9 | 10 | 11 |
| 1. | 100 | 100 | 100 | 100 | 100 |
| 2. | 80 | 100 | 100 | 100 | 100 |
| 3. | 40 | 100 | 100 | 100 | 100 |
| 4. | 10 | 90 | 52 | 29 | 80 |

Aus der Tabelle 6 ist zu ersehen, daß Zink-bis-(N-vinyloxyäthyldithiocarbamat) wie auch Kalium-N-(vinyloxyäthyl)dithiocarbamat in einer Konzentration von 0,012 % die Entwicklung aller untersuchten Schimmelpilze völlig unterdrückt hat. Bei geringeren Konzentrationen (bis 0,003%) wurde die Entwicklung aller Pilze außer Penicillium charlesii völlig gehemmt.

Tabelle 7 enthält Abgaben, welche die fungizide Aktivität der Verbindung gegen Pilze als Haupterreger von Krankheiten landwirtschaftlicher Kulturen charakteristren.

Tabelle 7

| Fungizide Aktivität von Zink-bis-(N-vinyloxyäthyldithiocarbamat) gegen Pilze, welche landwirtschaftliche Kulturen schädigen | | | | | | |
|---|---|---|---|---|---|---|
| Präparat | Myzelhemmung in % | | | | | |
| | Wirkstoff konzentration in % | Fusarium moniliforme | Rhizoctonia solani | Aspergillus niger | Fusarium sambucinum | Sphaeropsis mallorum |
| Zink-bis-(N-vinyloxyäthyldithiocarbamat) | 0,003 | 100 | 100 | 90 | 100 | 100 |
| TMTD (Vergleichsmuster) | 0,003 | 100 | 100 | 100 | 100 | 100 |

Das Mittel in einer Konzentration von 0,003 % hemmte also praktisch völlig die Entwicklung der untersuchten Pilze.

Zink-bis-(N-vinyloxyäthyldithiocarbamat) zeigte eine bedeutende fungizide Aktivität auch gegen Pilze, die nichtmetallische Werkstoffe zerstören. Tabelle 8 enthält die Prüfergebnisse.

Tabelle 8

| Fungizide Aktivität von Zink-bis-(N-vinyloxyäthylthiocarbamat) gegen Pilze, die nichtmetallische Werkstoffe zerstören. | | | | | |
|---|---|---|---|---|---|
| Präparat | Wirkstoffkonzentration in % | Myzelhemmung in % | | | |
| | | Aspergillus niger | Paecilomyces varioti | Stereum hirsutum | Penicillium funiculosum |
| Zink-bis-(N-vinyloxyäthyldithiocarbamat | 0,003 | 90 | 100 | 100 | 100 |
| Pentachlorphenol (Vergleichsmuster) | 0,003 | 100 | 100 | 100 | 100 |

Die dargestellten Anlagen zeugen davon, daß die fungizide Aktivität von Zink-bis-(N-vinyloxyäthyldithiocarbamat) geben diese Pilze sehr hoch ist.

Beispiel 12. Prüfung von Zink-bis-(N-vinyloxyäthyldithiocarbamat) gegen Wurzelfäule von Gewächshaus-Gurken.

Man nimmt 100 g unsterilen Boden, enthaltend 1 Teil Humus, 1 Teil Rasenboden, 1 Teil Sand, gibt darin ein Präparat, das Zink-bis-(N-vinyloxyäthyldithiocarbamat) ausgehend von 200 kg/ha Wirkstoff enthält.

Das Präparat wird wie folgt hergestellt: Einer gesättigten Lösung des genannten Salzes in Azeton gibt man einige Tropfen Emulgiermittel (hydroxyäthylierte Alkylphenole) zu und verdünnt mit Wasser. Innerhalb von 7 bis 8 Tagen begießt man dann bodenhaltige Gefäße mit Wasser, bis der Boden in einen Zustand gebracht wird, der 60% der vollen Wasseraufnahmekapazität des Feldes beträgt.

Nach dieser Zeit erfolgt die Aussaat von Gurkensamen, eingequollen im voraus in einer 0,1%igen $KMnO_4$-Lösung innerhalb von 2 Stunden. In jedes Gefäß werden je 10 Samen auf eine Tiefe von 1 bis 1,5 cm gesät. Nach 7 bis 9 Tagen berücksichtigt man die Keimungsfähigkeit von Samen, dann bestimmt man nach 3 Tagen den Befallumfang von Pflanzen durch Wurzelfäule, hervorgerufen durch einen Erregerkomplex. Die Versuche werden viermal wiederholt, als Vergleichsmuster dient Milon. Die Prüfergebnisse zeigt Tabelle 9.

Tabelle 9

| Wirksamkeit von Zink-bis-(N-vinyloxyäthyl) dithiocarbamat gegen Wurzelfäule von Gurken | | |
|---|---|---|
| Präparat | Keimungshäufigkeit in % | Entwicklung von Krankheiten in % |
| Zink-bis-(vinyloxyäthyldithiocarbamat) | 85,1 | 4,0 |
| Milon (Vergleichsmuster) | 70,3 | 0 |
| Kontrolle | 74,0 | 45,0 |

Diese Angaben zeigen, daß Zink-bis-(N-vinyloxyäthyldithiocarbamat) auch als Bodenfungizid sehr wirksam ist. Bei seiner Verwendung erhöht sich die Keimungsfähigkeit von Samen und vermindert sich wesentlich die Entwicklung von Wurzelfäule.

Aus den angeführten Beispielen für die Aktivität von Zink-bis-(N-vinyloxyäthyldithiocarbamat) ist zu ersehen, daß diese Verbindung in einer Konzentration von 0,003 bis 0,012 % eine bedeutende fungizide Aktivität gegen viele Testpilze der verschiedenen Gattungen aufweist. Der Stoff ist sehr wirksam bei dar Bekämpfung von Pilzen als Zerstörer nichtmetallischer Werkstoffe, Bodenfungiziden, Krankheitserregern landwirtschaftlicher Kulturen.

Beispiel 13. Fungizide Aktivität von Natrium-N-(vinyloxyäthyl)dithiocarbamat

Die fungizide Aktivität des Stoffes gegen reine Pilzkulturen wird nach der Methode des Beispiels 8 geprüft. Die erhaltenen Angaben sind in der Tabelle 10 dargestellt.

Tabelle 10. Fungizide Aktivität von Natrium-N-(vinyloxyäthyl)dithiocarbamat gegen Schimmelpilze

| lfd. Nr. | Konzentration des Präparats in % | Myzelhemmung in % | | | |
|---|---|---|---|---|---|
| | | Cladosporium resinae | Cladosporium cladosporioides | Acremonium cowum | Acremonium charticola |
| 1 | 2 | 3 | 4 | 5 | 6 |
| | 0,012 | 100 | 100 | 100 | 100 |
| | 0,006 | 100 | 100 | 100 | 100 |
| | 0,003 | 100 | 100 | 100 | 100 |
| | 0 0015 | 90 | 100 | 100 | 100 |

Fortsetzung der Tabelle 10

| lfd. Nr. | Myzelhemmung in % | | | | |
|---|---|---|---|---|---|
| | Penicillium chrysogenum | Penicillium charlesii Smith | Walrotiela subiculesa | Geotrichum candidum Link | Oidium Sp. |
| 1 | 7 | 8 | 9 | 10 | 11 |
| 1. | 100 | 100 | 100 | 100 | 100 |
| 2. | 80 | 90 | 100 | 75 | 100 |
| 3. | 20 | 40 | 100 | 40 | 100 |
| 4. | 5 | 25 | 100 | 5 | 60 |

Die fungizide Aktivität von Natrium-N-(vinyloxyäthyl)dithiocarbamat gegen Schimmelpilze kam der Aktivität von Kalium- und Zinksalzen der N-(Vinyloxyäthyl)dithiocarbamidsäure (Beispiel 8 und 11) nahe, in einer Konzentration von 0,012 % wurde die Entwicklung aller untersuchten Pilze völlig gehemmt, während bei kleineren Konzentrationen das Wachstum von Schimmelpilzen der Gattung p.p. Penicillium und p. Geotrichum auftrat.

Beispiel 14. Fungizide Aktivität von Kupfer-bis-(N-vinyloxyäthyldithiocarbamat)

Die Prüfung der fungiziden Aktivität von Kupfer-bis-(N-vinyloxyäthyldithiocarbamat) wurde nach der Methode des Beispiels 8 durchgeführt.

Die Prüfergebnisse sind in der Tabelle 11 dargestellt.

Tabelle 11. Fungizide Aktivität von Kupfer-bis-(N--vinyloxyäthyldithiocarbamat) gegen Schimmelpilze

| Lfd. Nr. | Konzentration des Präparats % | Myzelhemmung in % | | | |
|---|---|---|---|---|---|
| | | Cladosporium resinae | Cladosporium cladosporioides | Acremonium cowum | Acremonium charticola |
| 1 | 2 | 3 | 4 | 5 | 6 |
| 1. | 0,10 | 100 | 100 | 100 | 100 |
| 2. | 0,05 | 90 | 80 | 100 | 100 |
| 3. | 0,02 | 80 | 65 | 100 | 100 |
| 4. | 0,01 | 50 | 36 | 100 | 96 |
| 5. | 0,005 | 34 | 15 | 100 | 70 |

Fortsetzung der Tabelle 11

| Lfd. Nr. | Myzelhemmung in % | | | |
|---|---|---|---|---|
| | Penicillium chrysogenum | Penicillium charlesii Smith | Geotrichum candidum Link | Walrotiela subiculesa |
| 1 | 7 | 8 | 9 | 10 |
| 1. | 100 | 100 | 100 | 100 |
| 2. | 70 | 100 | 100 | 37 |
| 3. | 36 | 80 | 100 | 10 |
| 4. | 25 | 30 | 100 | 0 |
| 5. | 10 | 15 | 100 | 0 |

Kupfer-bis-(N-vinyloxyäthyldithiocarbamat) zeigt zwar eine gewisse fungizide Aktivität, jedoch eine bedeutend geringere als Kalium-, Zink- und Natriumsalze der N-(Vinyloxyäthyl)dithiocarbamidsäure. Eine vollständige Wachstumshemmung der untersuchten Pilze trat nur bei einer mindenstens 0,1 % betragenden Konzentration der Verbindung auf.

Beispiel 15. Fungizide Aktivität von Kupfer-N-(vinyloxyäthyl)dithiocarbamat.

Die Prüfung der fungiziden Aktivität erfolgte nach der Methode des Beispiels 8. Die Prüfergebnisse sind in der Tabelle 12 dargestellt.

Tabelle 12. Fungizide Aktivität von Kupfer-N-(vinyloxyäthyl)dithiocarbamat gegen Schimmelpilze

Tabelle 12

| lfd. Nr. | Konzentration des Praparats in % | Myzelhemmung in % | | | |
|---|---|---|---|---|---|
| | | Cladosporium resinae | Cladosporium cladosporioides | Acremonium cowum | Acremonium charticola |
| 1 | 2 | 3 | 4 | 5 | 6 |
| 1. | 0,8 | 100 | 100 | 100 | 100 |
| 2. | 0,4 | 100 | 100 | 100 | 100 |
| 3. | 0,2 | 75 | 100 | 100 | 100 |
| 4. | 0,1 | 43 | 100 | 100 | 50 |
| 5. | 0,05 | 34 | 45 | 50 | 43 |

Fortsetzung der Tabelle 12

| lfd. Nr. | Myzelhemmung in % | | | |
|---|---|---|---|---|
| | Penicillium chrysogenum | Penicillium charlesii Smith | Geotrichum candidum Link | Walrotiela subiculesa |
| 1 | 7 | 8 | 9 | 10 |
| 1. | 100 | 100 | 100 | 100 |
| 2. | 85 | 92 | 100 | 100 |
| 3. | 40 | 37 | 100 | 45 |
| 4. | 4 | 26 | 100 | 50 |
| 5. | 4 | 24 | 30 | 0 |

Die aufgeführten Angaben zeigen, daß die untersuchte Verbindung in einer Konzentration von mindenstens 0,8 % völlig die Entwicklung von Schimmelpilzen unterdrückt, weil im Falle einer geringeren (0,4 %) Konzentration das Wachstum von Pilzen der Gattung Penicillium nicht vollständig (zu 85 bis 92 %) gehemmt wird.

Beispiel 16. Bakterizide Aktivität von Kalium-, Natrium-, Zink- und Kupfersalzen der N-(Vinyloxyäthyl)-dithiocarbamidsäure

Geprüft wird die bakterizide Aktivität von Kalium-, Natrium-, Zink- und Kupfersalzen der N-(Vinyloxyäthyl)dithiocarbamidsäure gegen Bakterien der Gattungen Bacillus, Micrococcus, Pseudomonas, Escherichia und Xantomonas.

Man stellt wäßrige Stofflösungen verschiedener Konzentration her, die so berechnet werden, daß die Stoffkonzentration in der Petri-Schale bei der Gabe von 1 ml Lösung in das geschmolzene Nährmedium (45 bis 50 °C) zwischen 0,003 und 25 % (bezogen auf den Wirkstoff) schwankt. Nach 18 bis 24 Stunden bringt man auf die Oberfläche des Nährmediums 0,1 ml wäßrige Suspension eintägiger reiner Kulturen von Bakterien auf und verteilt sie gleichmäßig. In Kontrollschalen verteilt sich 0,1 ml Wasser über die Oberfläche des Nährmediums. Die Inkubation erfolgt bei 37 °C innerhalb von 5 Tagen. Die Wirksamkeit der Stoffe wird nach dem Auftreten des Bakterienwachstums auf der Oberfläche des Nährmediums eingeschätzt. Die Prüfergebnisse sind in der Tabelle 13 dargestellt.

Tabelle 13

| Konzentrationen von N-(Vinyloxyäthyl)dithiocarbamaten (% bezogen auf den Wirkstoff), welche das Bakterienwachstum am 5. Tag des Myzelwachstums völlig (100 %) hemmen. | | | | | | |
|---|---|---|---|---|---|---|
| lfd. Nr. | Benennung von Bakterien | Salze der N-(Vinyloxyathyl) dithiocarbamidsäure | | | | |
| | | Kaliumsalz | Natriumsalz | Zinksalz | Kupfer(II)salz | Kupfer(I)salz |
| 1. | p. Bocillus | 0,05 | 0,075 | 0,05 | 0,15 | 0,25 |
| 2. | p. Micrococcus | 0,05 | 0,075 | 0,05 | 0,15 | 0,25 |
| 3. | p. Pseudomonas | 0,05 | 0,075 | 0,05 | 0,15 | 0,25 |
| 4. | p. Escherichia | 0,05 | 0,075 | 0,05 | 0,15 | 0,25 |
| 5. | p. Xantomonas | 0,003 | - | - | 0,15 | 0,25 |

Besonders bakterientötend gegen untersuchte Bakterien wirkten also Kalium- und Zinksalze der angegebenen Säure.

Beispiel 17. Akarizide Aktivität von Kalium- und Natrium-N-(vinyloxyäthyl)dithiocarbamaten

Die akarizide Aktivität der Stoffe wird an isolierten Milben Psoroptes cuniculi als Erreger der Psoroptesräude bei Kaninchen geprüft. Von frischen Verkrustungen von Kaninchen mit Psoroptesräude, werden zu diesem Zweck 50 Milbenexemplare (Larven, Nymphen, Imago) gewählt und in Petri-Schalen auf ein Filterpapierblatt übertragen. Dann bringt man auf Milben und die ganze Blattoberfläche 1,5 ml zu prüfende wäßrige Stofflösung in destilliertem Wasser auf. Die Schale wird mit Deckel verschlossen und in einen Thermostat bei 30 °C und Feuchtegehalt von 90 % angeordnet. Der Wirkstoff wird als wäßrige Lösung mit einer zwischen 0,0039 und 4 % liegenden Konzentration genommen. Als Vergleichsmuster dient gleichzeitig eine wäßrige Lösung von Chlorophos. Milben werden im Kontrollversuch (Kontrolle auf Lebensfähigkeit)mit 1,5 ml physiologischer Lösung behandelt und in einen anderen Thermostat unter gleichen Temperatur- und Feuchtigkeitsbedingungen aufgestellt.

Nach 1, 2, 4, 6 Stunden und alle 24 Stunden betrachtet man die Milben im Mikroskop und zählt die toten Milben. Aufgrund der Milbenvernichtung durch einen 24-stündigen Kontakt mit dem Wirkstoff ermittelt man die LK-50 Werte. Die Versuche werden 5mal wiederholt. Arithmetische Mittelwerte gibt Tabelle 14 an.

Tabelle 14

| Akarizide Aktivität von Kalium- und Natriumsalzen der N-(Vinyloxyäthyl)dithiocarbamidsäure | | | |
|---|---|---|---|
| Präparat | Konzentration in % | Vernichtung von 100 % der Milben nach Stunden | LK-50 % |
| Natrium-N-(vinyl)oxyäthyl)dithiocarbamat (Lösungen) | 0,0039<br>0,0078<br>0,0625 bis 0,125<br>0,125 bis 0,5<br>1,0 bis 4,0 | 48<br>24<br>6<br>4<br>2 | 0,0022 |
| Kalium-N-(vinyloxyäthyl)dithiocarbamat(Lösungen) | 0,0039<br>0,0078<br>0,0625<br>0,125 bis 0,5<br>1,0 bis 4,0 | 48<br>24<br>6<br>4<br>2 | 0,00208 |
| Chlorophos (Lösungen) | 0,25<br>0,5 bis 1,0<br>3,0 | 72<br>48<br>24 | 0,8 |
| physiologische Lösung als Kontrolle | - | 168 | - |

Somit besitzen Natrium-N-(vinyloxyäthyl)dithiocarbamat und Kalium-N-(vinyloxyäthyl)dithiocarbamat eine hohe akarizide Aktivität und hohe Geschwindigkeit der toxischen Wirkung gegen Räudemilben, die um eine Zehnerpotenz dieselbe bei Chlorophos als Vergleichsmuster übersteigt.

Beispiel 18. Insektizide Aktivität von Kalium-N-(vinyloxyäthyl)dithiocarbamat und Zink-bis-(N-vinyloxyäthyl-dithiocarbamat)

Die Prüfungen auf insektizide Aktivität werden an Larven von Fichtenböcken durchgeführt. Geprüft werden eine 10%ige wäßrige Lösung von Kalium-N-(vinyloxyäthyl)dithiocarbamat und eine 10%ige alkoholische Lösung von Zink-bis-N-(vinyloxyathyldithiocarbamat). In jedem Versuch stehen je 20 Larven zur Verfügung. Die Mortalität wird nach 1, 24 und 48 Stunden ermittelt. Die zu prüfenden Lösungen werden auf die Kopfbrust von Larven aufgebracht.

Durch Wirkung von Kalium-N-(vinyloxyäthyl)dithiocarbamat kommt es nach 1 Stunde zum 20%igen und nach 24 Stunden zum 100%igen Tod von Larven der Fichtenböcke. Die Wirkung von Zink-bis-(N-vinyloxyäthyldithiocarbamat) vernichtet 88% nach 24 Stunden und 100% nach 48 Stunden. Als Vergleichsmuster wurde unter Versuchsbedingungen eine 10%ige wäßrige Lösung von Chlorophos verwendet. Die Prüfergebnisse sind in der Tabelle 15 dargestellt.

Tabelle 15

| Insektizide Aktivität von Kalium-N-(vinyloxyäthyl)dithiocarbamat und Zink-bis-(N-vinyloxyäthyldithiocarbamat) | | |
|---|---|---|
| Präparat | Wirkungsdauer in Stunden | Mortalität von Larven der Fichtenböcke |
| Kalium-N-(vinyloxyäthyl)dithiocarbamat | 1<br>24<br>48 | 20<br>100<br>100 |
| Zink-bis-(N-vinyloxyäthyldithiocarbamat) | 1<br>24<br>48 | 10<br>88<br>100 |
| Chlorophos | 1<br>24<br>48 | 0<br>20<br>57 |

Die Tabelle zeigt, daß Kalium-N-(vinyloxyäthyl)dithiocarbamat und Zink-bis-(N-vinyloxyäthyldithiocarbamat) eine hohe insektizide Aktivität aufweisen und sich bei der Bekämpfung von Forstschädlingen verwenden lassen.

Industrielle Anwendbarkeit

Die erfindungsgemäßen N-(Vinyloxyäthyl)dithiocarbamate lassen sich in der Landwirtschaft (Pflanzenbau und Tierzucht) sowie in der Forstwirtschaft und Industrie als Pflanzenschutzmittel insbesondere als Fungizide, Bakterizide, Akarizide und Insektizide und außerdem zum Schutz von Baumwollgewebe, Papier, Pappe und anderen zellulosehaltigen Werkstoffen gegen biologische Schäden durch Schimmelpilze bei der Erhöhung von Feuchtigkeit und Temperatur verwenden.

**Patentansprüche**

1. N-(Vinyloxyethyl)dithiocarbamate, dadurch **gekennzeichnet,** daß sie eine Formel

   $[CH_2=CHOCH_2CH_2NHC(S)S]_nM$

   haben, worin M für K, Na, Zn, Cu steht und n = 1, 2 ist, mit Ausnahme von 2-Vinyloxyethyldithiocarbamat-Na.

2. Verfahren zur Herstellung von N-(Vinyloxyäthyl)dithiocarbamaten nach Anspruch 1, **dadurch gekennzeichnet**, daß man die Umsetzung von Vinyloxyäthylamin, Schwefelkohlenstoff und Kalium- oder Natriumhydroxid in einem wäßrigen Medium oder einem organischen Lösungsmittel unter Herstellung von Salzen der Formel $[CH_2=CHOCH_2CH_2NHC(S)S]_nM$, worin M für K, Na steht, durchführt, wobei man dann aus diesen Salzen durch Behandlung derselben mit wasserlöslichen Zink- oder Kupfersalzen Salze der angegebenen Formel gewinnt, worin M für Zn, Cu steht.

3. Verfahren nach Anspruch 2, **dadurch gekennzeichnet,** daß als organisches Lösungsmittel Vinyloxyäthylamin, Benzol und Alkohole dienen.

4. Verfahren nach Anspruch 2 und 3, **dadurch gekennzeichnet**, daß die Umsetzung von Vinyloxyäthylamin mit Schwefelkohlenstoff und Kalium- oder Natriumhydroxid bei einer zwischen 20 und 80 °C liegenden Temperatur unter Normaldruck erfolgt.

5. Verfahren nach Anspruch 2 bis 4, **dadurch gekennzeichnet,** daß als wasserlösliche Zink- oder Kupfersalze Zink- oder Kupferchloride verwendet werden.

6. Pflanzenschutzmittel, enthaltend einen Wirkstoff, **dadurch gekennzeichnet**, daß es als Wirkstoff N-(Vinyloxyäthyl)dithiocarbamate der Formel $[CH_2=CHOCH_2CH_2NHC(S)S]_nM$ enthält, worin M für K,Na, Cu, Zn steht und n = 1, 2 ist.

7. Pflanzenschutzmittel nach Anspruch 6, **dadurch gekennzeichnet,** daß es einen Träger enthält.

8. Pflanzenschutzmittel nach Anspruch 7, **dadurch gekennzeichnet,** daß es als Träger Lösungsmittel oder einen festen Füllstoff enthält.

9. Pflanzenschutzmittel nach Anspruch 6, **dadurch gekennzeichnet,** daß es Kalium-N-(vinyloxyäthyl) dithiocarbamat enthält, welches eine fungizide, bakterizide, akarizide und insektizide Aktivität aufweist.

10. Pflanzenschutzmittel nach Anspruch 6, **dadurch gekennzeichnet**, daß es Natrium-N-(vinyloxyäthyl)-dithiocarbamat enthält, welches eine fungizide, bakterizide und skarizide Aktivität aufweist.

11. Pflanzenschutzmittel nach Anspruch 6, **dadurch gekennzeichnet,** daß es Zink-bis-(N-vinyloxyäthyldithiocarbamat) enthält, welches eine fungizide, bakterizide und insektizide Aktivität aufweist.

12. Pflanzenschutzmittel nach Anspruch 6, **dadurch gekennzeichnet**, daß der Gehalt am genannten Wirkstoff 0,003 bis 95 Masse% beträgt.

## Claims

1. N-(vinyloxyethyl) dithiocarbamates, characterized in that they have a formula

$$[CH_2=CHOCH_2CH_2NHC(S)S]_nM$$

in which M represents K, Na, Zn, Cu and n = 1, 2, with the exception of 2-vinyloxyethyl dithiocarbamate-Na.

2. A process for preparing N-(vinyloxyethyl) dithiocarbamates according to Claim 1, characterized in that the reaction of vinyloxyethylamine, carbon disulphide and potassium hydroxide or sodium hydroxide takes place in an aqueous medium or an organic solvent while producing salts of the formula $[CH_2=CHOCH_2CH_2NHC(S)S]_nM$, in which M represents K, Na, salts of the formula indicated being obtained from the said salts by treating them with water-soluble zinc or copper salts, in which M represents Zn, Cu.

3. A process according to Claim 2, characterized in that vinyloxyethylamine, benzene and alcohols are used as organic solvents.

4. A process according to Claims 2 and 3, characterized in that the reaction of vinyloxyethylamine with carbon disulphide and potassium hydroxide or sodium hydroxide takes place under normal pressure at a temperature of between 20 and 80 °C.

5. A process according to Claims 2 to 4, characterized in that zinc chlorides or copper chlorides are used as water-soluble zinc or copper salts.

6. A pesticide containing an active ingedient, characterized in that it contains as the active ingredient N-(vinyloxyethyl) dithiocarbamates of the formula $[CH_2=CHOCH_2CH_2NHC(S)S]_nM$, in which M represents K, Na, Cu, Zn and n = 1, 2.

7. A pesticide according to Claim 6, characterized in that it contains a carrier.

8. A pesticide according to Claim 7, characterized in that it contains solvents or a solid filler as the carrier.

9. A pesticide according to Claim 6, characterized in that it contains potassium-N-(vinyloxyethyl) dithiocarbamate, which has a fungicidal, bactericidal, acaricidal and insecticidal activity.

**10.** A pesticide according to Claim 6, characterized in that it contains sodium-N-(vinyloxyethyl) dithiocarbamate, which has a fungicidal, bactericidal and acaricidal activity.

**11.** A pesticide according to Claim 6, characterized in that it contains zinc-bis-(N-vinyloxyethyldithiocarbamate), which has a fungicidal, bactericidal and insecticidal activity.

**12.** A pesticide according to Claim 6, characterized in that the content of the said active ingredient amounts to 0•003 to 95% by mass.

## Revendications

**1.** N-(vinyloxyéthyl)dithiocarbamates, caractérisés en ce qu'ils ont pour formule

$[CH_2 = CHOCH_2CH_2NHC(S)S]_nM$

où M indique K, Na, Zn ou Cu et n = 1, 2, à l'exception du 2-vinyloxyéthyldithiocarbamate-Na.

**2.** Procédé de production de N-(vinyloxyéthyl)dithiocarbamates selon la revendication 1, caractérisé en ce que l'on accomplit la décomposition de vinyloxyéthylamine, de sulfure de carbone et d'hydroxyde de potassium ou de sodium dans un milieu aqueux ou un solvant organique avec production de sels de la formule $[CH_2 = CHOCH_2CH_2NHC(S)S]_nM$, où M indique K ou Na, pour obtenir ensuite, de ces sels, par leur traitement avec des sels solubles dans l'eau de zinc ou de cuivre, des sels de la formule indiquée, où M indique Zn ou Cu.

**3.** Procédé selon la revendication 2, caractérisé en ce qu'on utilise,en tant que solvant organique, de la vinyloxyéthylamine, du benzène et des alcools.

**4.** Procédé selon la revendication 2 ou 3, caractérisé en ce que la décomposition de la vinyloxyéthylamine avec du sulfure de carbone et de l'hydroxyde de potassium ou de sodium est accomplie à une température comprise entre 20 et 80°C à pression normale.

**5.** Procédé selon l'une des revendications 2 à 4, caractérisé en ce qu'on utilise,en tant que sel soluble dans l'eau de zinc ou de cuivre, du chlorure de zinc ou de cuivre.

**6.** Agent de protection des plantes, contenant une matière active, caractérisé en ce qu'il contient,en tant que matière active, des N-(vinyloxyéthyl)dithiocarbamates de la formule $[CH_2 = CHOCH_2CH_2NHC(S)S]_nM$, où M indique K, Na, Cu ou Zn et n = 1 ou 2.

**7.** Agent de protection des plantes selon la revendication 6, caractérisé en ce qu'il contient un support.

**8.** Agent de protection des plantes selon la revendication 7, caractérisé en ce qu'il contient,en tant que support,un solvant ou une charge solide.

**9.** Agent de protection des plantes selon la revendication 6, caractérisé en ce qu'il contient du N-(vinyloxyéthyl)dithiocarbamate de potassium qui présente une activité fongicide, bactéricide, acaricide et insecticide.

**10.** Agent de protection des plantes selon la revendication 6, caractérisé en ce qu'il contient du N-(vinyloxyéthyl)thiocarbamate de sodium qui présente une activité fongicide, bactéricide et acaricide.

**11.** Agent de protection des plantes selon la revendication 6, caractérisé en ce qu'il contient du bis-(N-vinyloxyéthyldithiocarbamate) de zinc qui présente une activité fongicide, bactéricide et insecticide.

**12.** Agent de protection des plantes selon la revendication 6, caractérisé en ce que la teneur en ladite matière active est de 0,003 à 95% en poids.